# EUROPEAN PATENT SPECIFICATION

(11) **EP 3 362 905 B1**
(45) Date of publication and mention of the grant of the patent: **06.05.2020**
(21) Application number: 15906375.9
(22) Date of filing: 15.10.2015
(51) Int. Cl.: G06F 13/38, G06F 13/40

(54) **UTILIZING PINS ON A UNIVERSAL SERIAL BUS (USB) TYPE-C CONNECTOR FOR A DATA SIGNAL**
VERWENDUNG VON STIFTEN AUF EINEM C-VERBINDER VOM TYP EINES UNIVERSELLEN SERIELLEN BUSSES (USB) FÜR EIN DATENSIGNAL
UTILISATION DE BROCHES SUR UN CONNECTEUR USB (BUS SÉRIE UNIVERSEL) DE TYPE C POUR UN SIGNAL DE DONNÉES

(43) Date of publication of application: 22.08.2018
(73) Proprietor: Hewlett-Packard Development Company, L.P., Spring TX 77389 (US)
(72) Inventor: JABORI, Monji G., Houston, Texas 77070 (US); CHAN, Kenneth, Houston, Texas 77070 (US)
(74) Representative: Haseltine Lake Kempner LLP
(86) International application number: PCT/US2015/055674
(87) International publication number: WO 2017/065769

(56) References cited:
- EP-A1- 2 860 642
- WO-A2-2008/062400
- US-A1- 2008 274 633
- US-A1- 2010 109 795
- US-A1- 2014 235 095
- US-A1- 2015 269 102
- US-B1- 7 717 717
- Anonymous: "Universal Serial Bus Type-C Cable and Connector Specification", USB 3.0 Promoter Group, Revision 1.0, 11 August 2014 (2014-08-11), pages 13-17, XP055454092, Retrieved from the Internet: URL:http://www.those.ch/designtechnik/wp-c ontent/uploads/2014/08/USB-Type-C-Specific ation-Release-1.0.pdf [retrieved on 2018-02-26]

## Description

### BACKGROUND

A universal serial bus (USB) type-C connector is a mechanism that connects an electronic device to a peripheral device such that data, video, and power may be exchanged between the electronic device and the peripheral device. The USB type-C connector may include a receptacle side and a plug side. The receptacle side may include a number of pins and connects to the electronic device. The plug side may include a number of pins and connects to the peripheral device.

"Universal Serial Bus Type-C Cable and Connector Specification," USB 3.0 Promoter Group, Revision 1.0, 11 August 2014, defines the USB Type-C receptacles, plug and cables.

EP2860642 discloses methods and apparatus for connector interface pin mapping.

US2015/269102 discloses a method of connecting USB Type-C devices.

### SUMMARY

Aspects of the invention are set out in the appended claims to which reference should be made.

### BRIEF DESCRIPTION OF THE DRAWINGS

The accompanying drawings illustrate various examples of the principles described herein and are a part of the specification. The examples do not limit the scope of the claims.
Fig. 1A is a diagram of a number of pins on a receptacle side of a universal serial bus (USB) type-C connector, according to one example of principles described herein.
Fig. 1B is a diagram of a number of pins on a plug side of a USB type-C connector, according to one example of principles described herein.
Fig. 2A is a diagram of a system for utilizing pins on a USB type-C connector for a data signal, according to one example of principles described herein.
Fig. 2B is a diagram of a system for utilizing pins on a USB type-C connector for a data signal, according to one example of principles described herein.
Fig. 3 is a flowchart a method for utilizing pins on a USB type-C connector for a data signal, according to one example of principles described herein.
Fig. 4 is a flowchart of a method for utilizing pins on USB type-C connector for a data signal, according to one example of principles described herein.

Throughout the drawings, identical reference numbers designate similar, but not necessarily identical, elements.

### DETAILED DESCRIPTION

As mentioned above, a universal serial bus (USB) type-C connector is a mechanism that connects an electronic device to a peripheral device such that information may be exchanged between the electronic device and the peripheral device. The USB type-C connector may include a receptacle side and a plug side. The receptacle side of the USB type-C connector may include a number of pins. The pins on the receptacle side of the USB type-C connector may be arranged in a specific order such that the receptacle side of the USB type-C connector may be reversible. This allows the receptacle side of the USB type-C connector to connect to the electronic device in two different orientations.

To make the receptacle side of the USB type-C connector reversible, pins associated with a differential pair signal are shorted together such that functionality remains regardless of the receptacle side of the USB type-C connector's orientation. For example, pin A7 and B7 on the receptacle side of the USB type-C connector may be are shorted together. Further, pin A6 and B6 on the receptacle side of the USB type-C connector are also shorted together. Depending on the receptacle side of the USB type-C connector's orientation pins A6 and pin A7 or pin B6 and B7 may be used for the differential pair signal. While shorting these pins together as described above creates the reversible function, only pins A6 and pin A7 or pin B6 and B7 will be used for the differential pair signal based on the orientation of the receptacle side of the USB type-C connector. This results in either pins A6 and pin A7 or pin B6 and B7 not being used for the differential pair signal. However, because these pins are shorted together as described above, these pins cannot be used to transmit additional signals between the electronic device and the peripheral device. As a result, more pins are needed on the receptacle side of the USB type-C connector and the plug side of the USB type-C connector if the additional signals are to be exchanged between the electronic device and the peripheral device. This results in a larger USB type-C connector with additional pins if additional signals are to be exchanged between the electronic device and the peripheral device.

The principles described herein include a system for utilizing pins on a USB type-C connector for a data signal. Such a system includes a circuit to, based on an orientation of a receptacle side of the USB type-C connector when connected to an electronic device, identify spare pins used for the data signal instead of a differential pair signal on the receptacle side of the USB type-C connector, a controller to create the data signal from a number of signals received by the controller, the data signal to be routed from the receptacle side of the USB type-C connector to a plug side of the USB type-C connector, and a multiplexor (MUX) to, when the plug side of the USB type-C connector is connected to a peripheral device, route the data signal to the spare pins of the receptacle side of the USB type-C connector to allow the data signal to be exchanged between the electronic device and the peripheral device via the spare pins of the receptacle side of the USB type-C connector and bottom pins on the plug side of the USB type-C connector. Such a system allows at least two of the pins normally shorted for the differential pair signal to be utilized for the data signal. As a result, the USB type-C connector does not need to include extra pins for exchanging the data signal.

In the present specification and in the appended claims, the term "electronic device" means a device that accomplishes its purpose electronically. An electronic device may have a port for connecting to a receptacle side of a USB type-C connector. The electronic device may be a smart phone, a tablet, or another electronic device.

In the present specification and in the appended claims, the term "peripheral device" means a device that is in communication with an electronic device via a USB type-C connector. A peripheral device may be a docking station, a charging station, a keyboard, or another peripheral device.

In the present specification and in the appended claims, the term "USB type-C connector" means a mechanism that connects an electronic device to a peripheral device such that information may be exchanged between the electronic device and the peripheral device. The USB type-C connector may include a receptacle side and a plug side. The receptacle side of the USB type-C connector does not short pin A7 and B7 or pin A6 and B6 together.

In the present specification and in the appended claims, the term "orientation" means a direction in which the receptacle side of the USB type-C connector connects to an electronic device. The receptacle side of the USB type-C connector may connect to the electronic device in two different orientations. The two different orientations may include a first orientation and a second orientation. The first orientation may be a 180 degrees rotation of the receptacle side of the USB type-C connector from the second orientation when connected the electronic device. As a result, the receptacle side of the USB type-C connector may connect to the electronic device right side up or upside down.

In the present specification and in the appended claims, the term "data signal" means combinations of slow speed signals and sideband signals combined into a single signal. The slow speed signals and the sideband signals may be combined by a controller of an electronic device to create the data signal. As a result, the data signal may represent several signals lumped into a property signal and is communicated to peripheral devices that are capable of receiving or transmitting the data signal.

In the present specification and in the appended claims, the term "spare pins" means pins on a receptacle side of a USB type-C connector that are used for exchanging a data signal between an electronic device and a peripheral device instead of a differential pair signal. Depending on the orientation of the receptacle side of the USB type-C connector when connected to an electronic device, the spare pins may be pin A6 and pin A7 or pin B6 and pin B7.

In the present specification and in the appended claims, the term "bottom pins" means pins on a plug side of a USB type-C connector that are used for exchanging a data signal between an electronic device and a peripheral device. The bottom pins on the plug side of the USB type-C connector may be pin B6 and pin B7.

Further, as used in the present specification and in the appended claims, the term "a number of" or similar language is meant to be understood broadly as any positive number comprising 1 to infinity; zero not being a number, but the absence of a number.

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described in connection with that example is included as described, but may not be included in other examples.

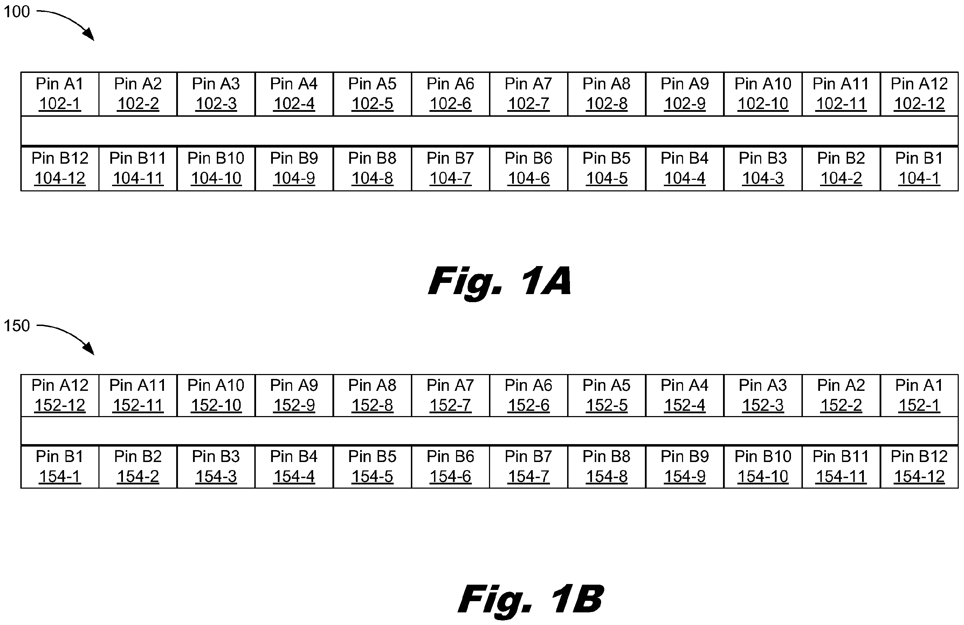

Referring now to the figures, Fig. 1A is a diagram of a number of pins on receptacle side of a USB type-C connector, according to one example of principles described herein. As will be described below, a receptacle side of the USB type-C connector includes a number of pins. The pins may connect to a port on an electronic device. The pins may be used to allow the electronic device to exchange data, video, and power with a peripheral device when a receptacle side of the USB type-C connector is connected to the peripheral device.

As illustrated, the receptacle side (100) of the USB type-C connector includes a number of pins (102 and 104). The pins (102 and 104) may be used to allow an electronic device to exchange data, video, and power with a peripheral device when a receptacle side of the USB type-C connector is connected to a peripheral device. Due to the orientation of these pins (102 and 104), the receptacle side (100) of the USB type-C connector may be connected to an electronic device in a number of orientations. The orientation may be a direction in which the receptacle side (100) of the USB type-C connector connects to an electronic device. As mentioned above, the receptacle side (100) of the USB type-C connector may connect to the electronic device in two different orientations. The two different orientations may include a first orientation and a second orientation. The first orientation may be a 180 degrees rotation of the receptacle side (100) of the USB type-C connector from the second orientation when connected the electronic device.

In an example, pin A1 (102-1), pin A12 (102-12), pin B12 (104-12), and pin B1 (104-1) may be utilized for a ground return. The ground return may be utilized as a reference point for which signals and/or voltages are measured. As a result, the signals and/or voltages on other pins may be measured based on the ground return.

Pin A2 (102-2), pin A3 (102-3), pin B3 (104-3), and pin B2 (104-2) may be used to transmit data from the electronic device to the peripheral device. In an example, the data that is produced by the electronic device is sent to pin A2 (102-2), pin A3 (102-3), pin B3 (104-3), and pin B2 (104-2). In some examples, pin A2 (102-2) may be used to transmit a positive signal of the data and pin A3 (102-3) may be used to transmit a negative signal of the data. Similarly, pin B2 (104-2) may be used to transmit a positive signal of the data and pin B3 (104-3) may be used to transmit a negative signal of the data. Once the data is sent to these pins, the data may be transmitted to a peripheral device if the peripheral device is connected to the plug side (150) of the USB type-C connector.

The receptacle side (100) of the USB type-C connector includes a number of pins to receive data from the peripheral device. Pin B11 (104-11), pin B10 (104-10), pin A10 (102-10), and pin A11 (102-11) may be used to receive the data. In some examples, the data may be produced by a peripheral device and received by the electronic device via these pins. In some examples, pin B11 (104-11) may be used to receive a positive signal of the data and pin B10 (104-10) may be used to receive a negative signal of the data. Similarly, pin A10 (102-10) may be used to receive a positive signal of the data and pin A11 (102-11) may be used to receive a negative signal of the data.

Pin A4 (102-4), pin A9 (102-9), pin B9 (104-9), and pin B4 (104-4) of the receptacle side (100) of the USB type-C connector may be used as bus power pins. These pins may be used to power components of the electronic device when the electronic device is connected to the receptacle side (100) of the USB type-C connector.

As illustrated, the receptacle side (100) of the USB type-C connector includes pin A5 (102-5) and pin B5 (104-5). Pin A5 (102-5) and pin B5 (104-5) may be used as a configuration channel. In some examples, the specification for the USB type-C connector allows for one of the two pins for the configuration channels to have a proper termination on it. The proper termination allows for determining the orientation of the receptacle side (100) of the USB type-C connector when connected to an electronic device by detecting the proper termination. The USB cable that sits between an upstream facing port (UFP) and a downstream facing port (DFP) may be connected one of four states when viewed by the DFP. The states may include an un-flipped straight through position, an un-flipped twisted through position, a flipped straight through position, and a flipped twisted through position. To establish the proper routing of the data signal, the USB type-C connector is wired such that a single configuration channel wire is position and aligned with the first USB SuperSpeed signal pairs. The USB SuperSpeed signal pairs may be associated with pin A2 (102-2), pin A3 (102-3), pin B11 (104-11), and pin B10 (104-10). This allows the configuration channel wire and the USB SuperSpeed signal pair wires that are used for signaling within the cable track with regard to the orientation and twist of the cable. By being able to detect which of the configuration channel pins at the receptacle side (100) is terminated by the UFP, the DFP is able to determine which USB SuperSpeed signals are to be used for the connection and the DFP can use this to control the functionality of a switch for routing the SuperSpeed signal pairs. Similarly, in the UFP, detecting which of the configuration channel pins at the receptacle side (100) is terminated by the DFP allows the UFP to control the switch that routes its SuperSpeed signal pairs. As a result, the configuration channel may be utilized to determine an orientation of the receptacle side (100) of the USB type-C connector.

The receptacle side (100) of the USB type-C connector includes pin A8 (102-8) and pin B8 (104-8). Pin A8 (102-8) and pin B8 (104-8) are used for sideband signals.

As illustrated, the receptacle side (100) of the USB type-C connector includes pin A6 (102-6), pin A7 (102-7), pin B7 (104-7), and pin B6 (104-6). As will be described in other parts of this specification, based on an orientation of a receptacle side (100) of the USB type-C connector when connected to an electronic device, pin A6 (102-6) and pin A7 (102-7) or pin B7 (104-7) and pin B6 (104-6) may be used as spare pins for a data signal or for a differential pair signal. For example, if the receptacle side (100) of the USB type-C connector is connected to the electronic device in a first orientation, pin A6 (102-6) and pin A7 (102-7) may be used as spare pins and pin B7 (104-7) and pin B6 (104-6) may be used for the differential pair signal. If the receptacle side (100) of the USB type-C connector is connected to the electronic device in a second orientation, pin B7 (104-7) and pin B6 (104-6) may be used as spare pins and pin A6 (102-6) and pin A7 (102-7) may be used for the differential pair signal. As a result, the spare pins may be used for the data signal instead of a USB differential pair signal on the receptacle side of the USB type-C connector. As a result, at least two of the pins normally shorted for the differential pair signal to be utilized for the data signal. This results in the USB type-C connector not needing to include extra pins for exchanging the data signal. As a result, the spare pins may be used for additional signal communication of the USB type-C connector. More information about the spare pins will be described in other parts of this specification.

Fig. 1B is a diagram of a number of pins on plug side of a USB type-C connector, according to one example of principles described herein. As will be described below, the plug side of a USB type-C connector includes a number of pins. The pins may be used to allow an electronic device to exchange communications with a peripheral device when the plug side of a USB type-C connector is connected to the peripheral device and the receptacle side of a USB type-C connector is connected to the electronic device.

As illustrated, the plug side (150) of the USB type-C connector includes a number of pins (152 and 154). In an example, pin A1 (152-1), pin A12 (152-12), pin B12 (154-12), and pin B1 (154-1) may be utilized for a ground return. Pin A1 (152-1), pin A12 (152-12), pin B12 (154-12), and pin B1 (154-1) of the plug side (150) of the USB type-C connector may be connected to the corresponding pin A1 (102-1), pin A12 (102-12), pin B12 (104-12), and pin B1 (104-1) on the receptacle side (100) of the USB type-C connector.

Pin A2 (152-2), pin A3 (152-3), pin B3 (154-3), and pin B2 (154-2) may be used to transmit data from the peripheral device to the electronic device. In some examples, pin A2 (152-2) may be used to transmit a positive signal of the data and pin A3 (152-3) may be used to transmit a negative signal of the data. Similarly, pin B2 (154-2) may be used to transmit a positive signal of the data and pin B3 (154-3) may be used to transmit a negative signal of the data. Pin A2 (152-2), pin A3 (152-3), pin B3 (154-3), and pin B2 (154-2) of the plug side (150) of the USB type-C connector may be connected to the corresponding pin A2 (102-2), pin A3 (102-3), pin B3 (104-3), and pin B2 (104-2) on the receptacle side (100) of the USB type-C connector.

The plug side (150) of the USB type-C connector includes a number of pins to receive data from the electronic device. Pin B11 (154-11), pin B10 (154-10), pin A10 (152-10), and pin A11 (152-11) may be used to receive the data. In some examples, pin B11 (154-11) may be used to receive a positive signal of the data and pin B10 (154-10) may be used to receive a negative signal of the data. Similarly, pin A10 (152-10) may be used to receive a positive signal of the data and pin A11 (152-11) may be used to receive a negative signal of the data. Pin B11 (154-11), pin B10 (154-10), pin A10 (152-10), and pin A11 (152-11) of the plug side (150) of the USB type-C connector may be connected to the corresponding pin B11 (104-11), pin B10 (104-10), pin A10 (102-10), and pin A11 (102-11) on the receptacle side (100) of the USB type-C connector.

Pin A4 (152-4), pin A9 (152-9), pin B9 (154-9), and pin B4 (154-4) may be used as bus power pins. Pin A4 (152-4), pin A9 (152-9), pin B9 (154-9), and pin B4 (154-4) of the plug side (150) of the USB type-C connector may be connected to the corresponding pin A4 (102-4), pin A9 (102-9), pin B9 (104-9), and pin B4 (104-4) on the receptacle side (100) of the USB type-C connector.

Pin A5 (152-5) and pin B5 (154-5) may be used as for configuration channel. Pin A5 (152-5) and pin B5 (154-5) may be connected to the corresponding pin A5 (102-5) and pin B5 (104-5) on the receptacle side (100) of the USB type-C connector.

Pin A8 (152-8) and pin B8 (154-8) are used as sideband. Pin A8 (152-8) and pin B8 (154-8) may be connected to the corresponding pin A8 (102-8) and pin B8 (104-8) on the receptacle side (100) of the USB type-C connector.

As illustrated, the receptacle side (100) of the USB type-C connector includes pin A6 (152-6) pin A7 (152-7). Pin A6 (152-6), pin A7 (152-7) may be differential pair pins on a plug side (150) of a USB type-C connector. As a result, pin A6 (152-6) pin A7 (152-7) may exchange the differential pair signal between the electronic device and the peripheral device as described above.

Pin B7 (104-7), and pin B6 (104-6) may be bottom pins. The bottom pins are pins on a plug side (150) of a USB type-C connector that are used for exchanging a data signal between the electronic device and the peripheral device. As will be described in other parts of this specification, the data signal is routed from either pin A6 (102-6) and A7 (102-7) of the receptacle side (100) of the USB type-C connector to the bottom pins or the data signal is routed from pin B6 (104-6) and B7 (104-7) of the receptacle side (100) of the USB type-C connector to the bottom pins depending on the orientation of the receptacle side (100) of the USB type-C connector when connected to the electronic device. Such a configuration allows at least two of the pins normally shorted for the differential pair signal to be utilized for the data signal. As a result, the USB type-C connector does not need to include extra pins for exchanging the data signal.

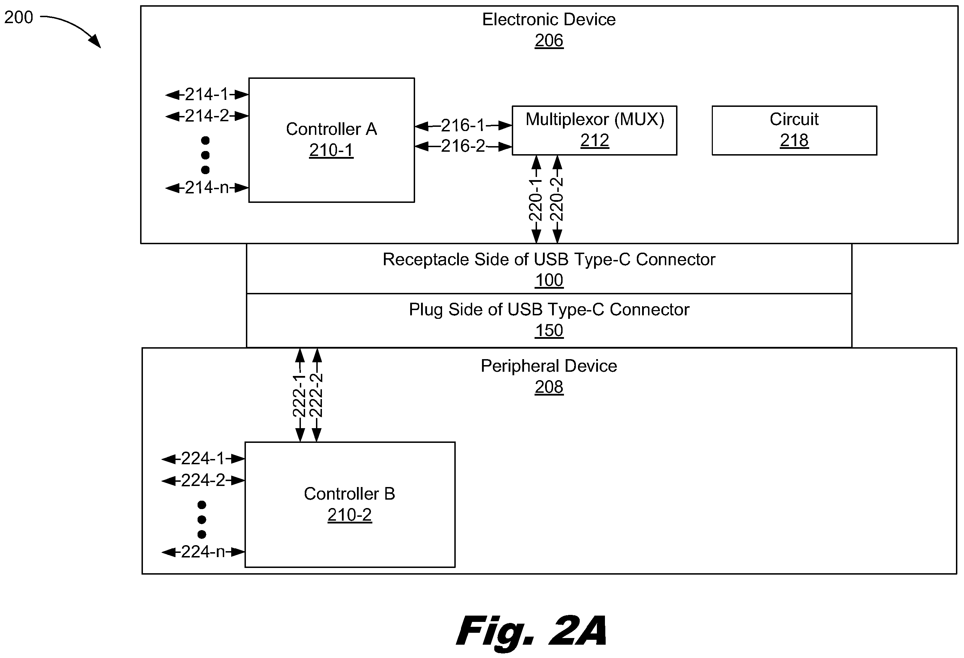

Fig. 2A is a diagram of a system for utilizing pins on a USB type-C connector for a data signal, according to one example of principles described herein. As will be described below, a data signal is routed from the receptacle side (100) of the USB type-C connector to a plug side (150) of the USB type-C connector.

As illustrated, the system (200) includes an electronic device (206). The electronic device (206) is a device that accomplishes its purpose electronically. An electronic device (206) may have a port for connecting to a receptacle side (100) of a USB type-C connector. The electronic device may be a smart phone, a tablet, or another electronic device. As will be described below, the electronic device (206) may include a number of components.

The system (200) also includes a peripheral device (208). The peripheral device (208) may be a device that is in communication with the electronic device (206). The peripheral device (208) may have a port for connecting to a plug side (150) of the USB type-C connector. In some examples, the peripheral device (208) may be a docking station, a charging station, a keyboard, or another peripheral device. As will be described below, the peripheral device (208) may include a number of components.

In some examples, once the electronic device (206) is connected to the receptacle side (100) of a USB type-C connector and the peripheral device (208) is connected to the plug side (150) of the USB type-C connector, the electronic device (206) and the peripheral device (208) may communicate with each other. This may include exchanging data, video, and power.

As mentioned above, the electronic device (206) may include a number of components. One of the components may include a circuit (218). The circuit (218) may be used to, based on an orientation of a receptacle side (100) of the USB type-C connector when connected to the electronic device (206), identify spare pins. As mentioned above, the spare pins may be used for the data signal instead of a differential pair signal on the receptacle side (100) of the USB type-C connector.

As mentioned above, due to the arrangement of the pins (102 and 104) on the receptacle side (100) of the USB type-C connector, the receptacle side (100) of the USB type-C connector may be connected to an electronic device in a number of orientations. The orientation may be a direction in which the receptacle side (100) of the USB type-C connector connects to an electronic device. The receptacle side (100) of the USB type-C connector may connect to the electronic device (206) in two different orientations. The two different orientations may include a first orientation and a second orientation. The first orientation may be a 180 degrees rotation of the receptacle side (100) of the USB type-C connector from the second orientation when connected the electronic device. Based on an orientation of a receptacle side (100) of the USB type-C connector when connected to the electronic device (206), pin A6 (102-6) and pin A7 (102-7) or pin B7 (104-7) and pin B6 (104-6) may be the spare pins. For example, if the receptacle side (100) of the USB type-C connector is connected to the electronic device (206) in the first orientation, pin A6 (102-6) and pin A7 (102-7) may be the spare pins. If the receptacle side (100) of the USB type-C connector is connected to the electronic device (206) in the second orientation, pin A6 (102-6) and pin A7 (102-7) may be the spare pins pin B7 (104-7) and pin B6 (104-6) may be the spare pins. More information about determining the orientation of the receptacle side (100) of the USB type-C connector will be described in other parts of this specification.

While this example has been described with reference to the circuit (218) being located on the electronic device (206), the circuit (218) may be located in other locations. For example, the circuit (218) may be located on the receptacle side (100) of the USB type-C connector.

The electronic device includes controller A (210-1). Controller A (210-1) creates the data signal from a number of signals received by controller A (210-1). In some examples, the number of signals includes slow speed signals and sideband signals. The slow speed signals and the sideband signals may include an inter-integrated circuit (I2C) signal, an integrated interchip sound (I2S) signal, an interrupt signal, a light-emitting diode (LED) control signal, a sideband control signal, a system management bust (SMBus) signal, personal system 2 (PS/2) signal, a universal asynchronous receiver transmitter (UART) signal, or combinations thereof.

In an example, the number of signals may be received by controller A (210-1) via a number of inputs (214). For example, controller A (210-1) may receive a UART signal from a UART input (214-1). The controller (210-1) may receive an 12S signal from the 12S input (214-2). The controller (210-1) may receive an 12C signal from the 12C input (214-3).

In some examples, the number of signals may be prioritized if at least two signals are received by controller A (210-1) at the same time. For example, if the controller receives a UART signal from the UART input (214-1) and an 12S signal from the 12S input (214-2) at the same time, controller A (210-1) may prioritize the UART signal before the IS2 signal. As a result, controller A (210-1) may create the data signal from the UART signal before creating the data signal from the IS2 signal.

In an example, controller A (210-1) creates a positive data signal and a negative data signal from the number of signals. Methods and techniques may be used for creating the positive data signal and the negative data signal from the number of signals.

Once the data signal is created by the controller (210-1), the data signal is sent via wire 216-1 and wire 216-2 to a MUX (212). In an example, the positive data signal is sent via wire 216-1 to the MUX (212). The negative data signal is sent via wire 216-2 to the MUX (212).

While this example has been described with reference to controller A (210-1) being located on the electronic device (206), controller A (210-1) may be located in other locations. For example, controller A (210-1) may be located on the receptacle side (100) of the USB type-C connector.

As illustrated, the system (200) includes the MUX (212). The MUX (212) may be used to, when the plug side (150) of the USB type-C connector is connected to a peripheral device(208), route the data signal to the spare pins of the receptacle side (100) of the USB type-C connector to allow the data signal to be exchanged between the electronic device (206) and the peripheral device (208) via the spare pins of the receptacle side (100) of the USB type-C connector and bottom pins on the plug side (150) of the USB type-C connector.

Further, wires 220 may be connected to the output of the MUX (212). As illustrated, the data signal is routed by the MUX (212) via wire 220-1 and wire 220-2 to the spare pins of the receptacle side (100) of the USB type-C connector. In an example, wire 220-1 may be used for the positive data signal. Wire 220-2 may be used for the negative data signal. Although not illustrated, the MUX (212) may include a selector. The selector may select how to route the data signal to the spare pins. For example, if the receptacle side (100) of the USB type-C connector is connected to the electronic device (206) as the first orientation, the MUX (212) routes, based on the selector, the data signal to pin A6 (102-6) and pin A7 (102-7) via wires 220. If the receptacle side (100) of the USB type-C connector is connected to the electronic device (206) as the second orientation, the MUX (212) routes, based on the selector, the data signal to pin B7 (104-7) and pin B6 (104-6) via the wires 220.

While this example has been described with reference to the MUX (212) being located on the electronic device (206), the MUX (212) may be located in other locations. For example, the MUX (212) may be located on the receptacle side (100) of the USB type-C connector.

As mentioned above, the data signal is routed from the spare pins to the bottom pins of the plug side (150) of the USB type-C. The bottom pins of the plug side (150) of the USB type-C connector connect to wire 222-1 and wire 222-2. In an example, wire 222-1 may be used for the positive data signal. Wire 222-2 may be used for the negative data signal.

As illustrated, wire 222-1 and wire 222-2 are connected to controller B (210-2). As will be described in other parts of this specification, controller B (210-2) may be connected to other components of the peripheral device (208). As a result, the other components of the peripheral device (208) may execute the function of the data signal.

While this example has been described with reference to controller A (210-1) creating the data signal and transmitting the data signal from the electronic device (206) to the peripheral device (208) as described above, controller B (210-2) may create the data signal and transmit the data signal from the peripheral device (208) to the electronic device (206). As a result, the peripheral device may include a circuit and/or a MUX.

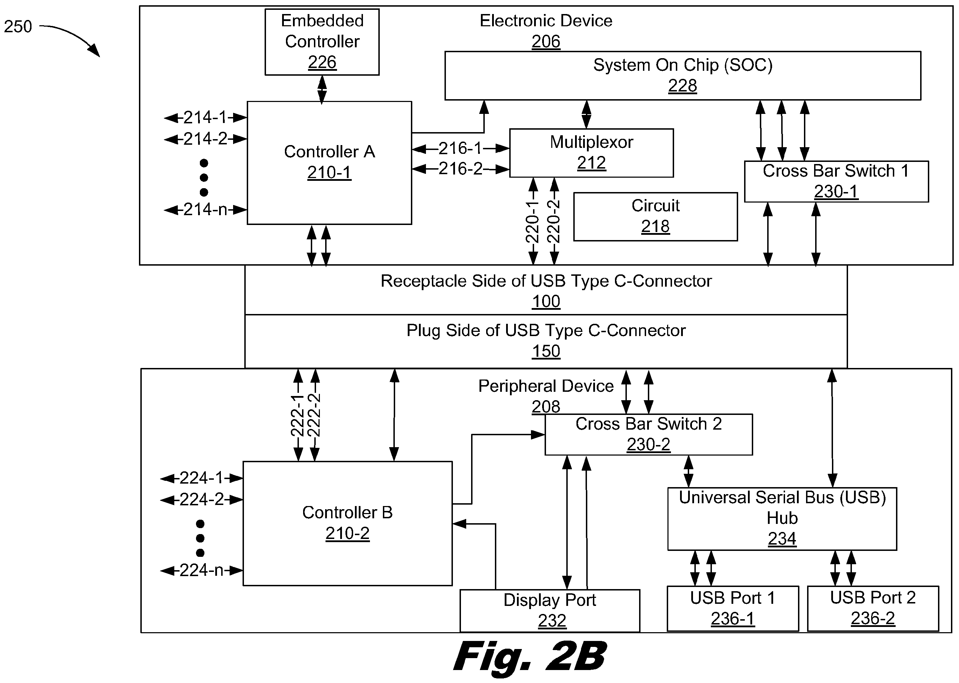

Fig. 2B is a diagram of a system for utilizing pins on a USB type-C connector for a data signal, according to one example of principles described herein. As will be described below, a data signal is routed from the receptacle side (100) of the USB type-C connector to a plug side (150) of the USB type-C connector.

As illustrated, the system (250) includes an embedded controller (226). The embedded controller (226) may control management functions of the electronic device (206). In an example, the embedded controller (226) may be connected to controller A (226) as indicated by the corresponding arrows in the system (250). As a result, the embedded controller (226) may control management functions of controller A (210-1). This results in controller A (210-1) being able to manage other functions. For example, controller A (210-1) may be connected to pin A5 (102-5) and pin B5 (104-5) of the receptacle side (100) of the USB type-C connector as illustrated. This may allow controller A (210-1) to send and/or receive a configuration channel signal via pin A5 (102-5) and/or pin B5 (104-5) of the receptacle side (100) of the USB type-C connector. This may allow the circuit (218) to determine the orientation of the receptacle side (100) of the USB type-C connector when connected to the electronic device (206) as described above.

As illustrated, the system (250) includes a system on chip (SOC) (228). The SOC (228) may be a central processing unit (CPU). In some examples, controller A (210-1) may send signals to the SOC (228) as indicated by the corresponding arrow in the system (250). As a result, controller A (210-1) may be in communication with the SOC (228). The SOC (228) may be connected to the MUX (212) as indicated by the corresponding arrow in the system (250). This may allow USB signals to be exchanged between the SOC (228) and the MUX (212).

The SOC (228) may be connected to cross bar switch 1 (230-1) as indicated by the corresponding arrow in the diagram. As a result, signals such as an auxiliary signal, a differential pair signal, a USB signal, and other signals may be exchanged between the SOC (228) and cross bar switch 1 (230-1).

As illustrated, the electronic device (206) includes cross bar switch 1 (230-1). Cross bar switch 1 (230-1) may be a collection of switches arranged in a matrix configuration. Cross bar switch 1 (230-1) has multiple input and output lines that form a crossed pattern of interconnecting lines between which a connection may be established by closing a switch located at each intersection, the elements of the matrix. In an example, signals such as an auxiliary signal, a differential pair signal, a USB signal, and other signals may be routed to or from cross bar switch 1 (230-1) to corresponding pins on the receptacle side (100) of the USB type-C connector.

As illustrated, the peripheral device (208) may include cross bar switch 2 (230-2). Cross bar switch 2 (230-2) may be similar to cross bar switch 1 (230-1). In an example, cross bar switch 2 (230-2) may be connected to controller B (210-2) as indicated by the arrows. In another example, signals such as an auxiliary signal, a differential pair signal, a USB signal, and other signals may be routed to or from cross bar switch 2 (230-2) to corresponding pins on the plug side (100) of the USB type-C connector.

In an example, cross bar switch 2 (230-2) may be connected to a display port (232) as indicated by the arrows. Cross bar switch 2 (230-2) may route the signals such as the auxiliary signal, the differential pair signal, and the other signals to the display port (232).

In another example, cross bar switch 2 (230-2) may be connected to a USB hub (234) as indicated by the arrows. Cross bar switch 2 (230-2) may route the USB signals to the USB hub (234). As a result, cross bar switch 2 (230-2) may send and receive signals as indicated by the arrows.

As mentioned above, the peripheral device (208) may include the display port (232). The display port (232) may be a digital display interface. The display port (232) may be used to connect a video source to a display device such as a computer monitor. As illustrated, the display port (232) may be connected to cross bar switch 2 (230-2) and controller B (210-2) as indicated by the arrows. As a result, the display port (232) may send and/or receive signals to or from cross bar switch 2 (230-2) and controller B (210-2).

The peripheral device (208) may include the USB hub (234). The USB hub (234) may expand a single USB port into several ports so that more devices may connect to the peripheral device (208). As illustrated, the USB hub (234) may be connected to USB port 1 (234-1) and USB port 2 (236-2). As a result, at least two devices may connect to the peripheral device (208).

In some examples, these components may be used to aid in routing the data signal to the spare pins of the receptacle side of the USB type-C connector to allow the data signal to be exchanged between an electronic device (206) and the peripheral device (208) via spare pins of the receptacle side of the USB type-C connector and bottom pins on the plug side of the USB type-C connector

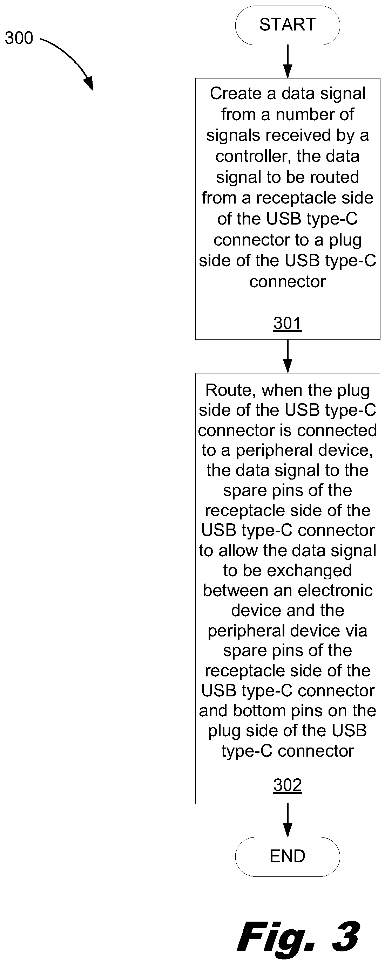

Fig. 3 is a flowchart a method for utilizing pins on a USB type-C connector for a data signal, according to one example of principles described herein. The method (300) may be executed by system 200 of Fig. 2A. The method (300) may be executed by other systems such as system 250 of Fig. 2B. In this example, the method (300) includes creating (301) a data signal from a number of signals received by a controller, the data signal to be routed from a receptacle side of the USB type-C connector to a plug side of the USB type-C connector and routing (302), when the plug side of the USB type-C connector is connected to a peripheral device, the data signal to the spare pins of the receptacle side of the USB type-C connector to allow the data signal to be exchanged between an electronic device and the peripheral device via spare pins of the receptacle side of the USB type-C connector and bottom pins on the plug side of the USB type-C connector.

As mentioned above, the method (300) includes creating (301) a data signal from a number of signals received by a controller, the data signal to be routed from a receptacle side of the USB type-C connector to a plug side of the USB type-C connector. In an example, the controller creates the data signal based on whether a circuit determines if the peripheral device is capable of receiving the data signal. For example, if the method (300) determines the peripheral device is capable of receiving the data signal, the method (300) utilizes the controller to create the data signal. If the method (300) determines the peripheral device is not capable of receiving the data signal, the method (300) does not utilize the controller to create the data signal.

As a result, the method (300) enables a company to have its own unique docking solution when attached to a peripheral device. However, when attaching an official USB type-C connector or off-the-shelve electronic devices or peripheral device, the method (300) will support standard function only and not present any extended functionality as the data signal does not get passed over the official USB type-C connector. This creates a great opportunity for a company to differentiate over competitors where full function is only supported using the company's products while offering basic function with off-the-shelve products. As a result, when this USB type-C connector is connected to an electronic device and a peripheral device, the USB type-C connector adds value and differentiation in a market where electronic devices and peripheral devices look and function the same.

As mentioned above, the method (300) includes routing (302), when the plug side of the USB type-C connector is connected to a peripheral device, the data signal to the spare pins of the receptacle side of the USB type-C connector to allow the data signal to be exchanged between an electronic device and the peripheral device via spare pins of the receptacle side of the USB type-C connector and bottom pins on the plug side of the USB type-C connector. In some examples, the spare pins on the receptacle side of the USB type-C connector are pin A6 and pin A7 or pin B6 and pin B7 depending on the orientation of the receptacle side of the USB type-C connector when connected to the electronic device. The bottom pins on the plug side of the USB type-C connector are pin B6 and pin B7.

In some examples, pin A6 and pin A7 may always be used as the spare pins. As a result, the method (300) may route the data signal to pin A6 and pin A7. In another example, pin B6 and pin B7 may always be used as the spare pins. As a result, the method (300) may route the data signal to pin B6 and pin B7

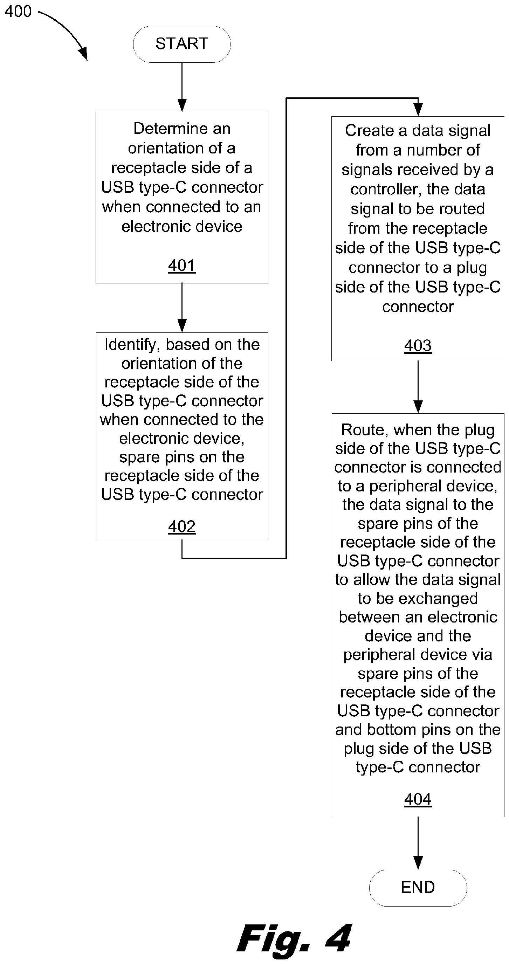

Fig. 4 is a flowchart of a method for utilizing pins on a USB type-C connector for a data signal, according to one example of principles described herein. The method (400) may be executed by system 200 of Fig. 2A. The method (400) may be executed by other systems such as system 250 of Fig. 2B. In this example, the method (400) includes determining (401) an orientation of a receptacle side of a USB type-C connector when connected to an electronic device, identifying (402), based on the orientation of the receptacle side of the USB type-C connector when connected to the electronic device, spare pins on the receptacle side of the USB type-C connector, creating (403) a data signal from a number of signals received by a controller, the data signal to be routed from the receptacle side of the USB type-C connector to a plug side of the USB type-C connector, and routing (404), when the plug side of the USB type-C connector is connected to a peripheral device, the data signal to the spare pins of the receptacle side of the USB type-C connector to allow the data signal to be exchanged between an electronic device and the peripheral device via spare pins of the receptacle side of the USB type-C connector and bottom pins on the plug side of the USB type-C connector.

As mentioned above, the method (400) includes determining (401) an orientation of a receptacle side of a USB type-C connector when connected to an electronic device. In some examples, a circuit on the electronic device may determine the orientation of the receptacle side of a USB type-C connector as described above via the configuration channel.

As mentioned above, the method (400) includes identifying (402), based on the orientation of the receptacle side of the USB type-C connector when connected to the electronic device, spare pins on the receptacle side of the USB type-C connector. Based on an orientation of a receptacle side (100) of the USB type-C connector when connected to an electronic device, pin A6 (102-6) and pin A7 (102-7) or pin B7 (104-7) and pin B6 (104-6) may be used as spare pins.

## Claims

1. A system (200), comprising:
a circuit (218) to, based on an orientation of a receptacle side (100) of a universal serial bus, USB, type-C connector when connected to an electronic device (206), identify spare pins used for a data signal instead of a USB differential pair signal on the receptacle side (100) of the USB type-C connector;
a controller (210) to create the data signal from a number of signals received by the controller (210), the data signal to be routed from the receptacle side (100) of the USB type-C connector to a plug side (150) of the USB type-C connector; and
a multiplexor, MUX (212), to, when the plug side (150) of the USB type-C connector is connected to a peripheral device (208), route the data signal to the spare pins of the receptacle side (100) of the USB type-C connector to allow the data signal to be exchanged between the electronic device (206) and the peripheral device (208) via the spare pins of the receptacle side (100) of the USB type-C connector and bottom pins on the plug side of the USB type-C connector,
wherein the spare pins on the receptacle side (100) of the USB type-C connector are pin A6 and pin A7, or pin B6 and pin B7, depending on the orientation of the receptacle side (100) of the USB type-C connector when connected to the electronic device (206).

2. The system (200) of claim 1, wherein the circuit (218) determines the orientation of the receptacle side (100) of the USB type-C connector when connected to the electronic device (206).

3. The system (200) of claim 1, wherein the number of signals comprises slow speed signals and sideband signals.

4. The system (200) of claim 3, wherein the slow speed signals and the sideband signals comprises an inter-integrated circuit, I2C, signal, an integrated interchip sound, I2S, signal, an interrupt signal, a light-emitting diode, LED, control signal, a sideband control signal, a system management bust, SMBus, signal, personal system 2, PS/2, signal, a universal asynchronous receiver transmitter, UART, signal, or combinations thereof.

5. The system (200) of claim 1, wherein the controller (210) creates the data signal based on whether the circuit (218) determines if the peripheral device (218) is capable of receiving the data signal.

6. A system, comprising:
an electronic device (206) including the system of claim 1; and
a peripheral device (208) to, when the plug side (150) of the USB type-C connector is connected to the peripheral device (208) receive the data signal via the bottom pins on the plug side of the USB type-C connector and execute a function of the data signal.

7. The system of claim 6, wherein the controller (210) of the electronic device (206) creates the data signal based on whether the circuit (218) determines if the peripheral device (208) is capable of receiving the data signal.

8. The system of claim 6, wherein the bottom pins on the plug side (100) of the USB type-C connector are pin B6 and pin B7.

9. The system of claim 6, wherein the number of signals comprises slow speed signals and sideband signals.

10. A method (300, 400), comprising:
identifying (402), based on an orientation of a receptacle side (100) of a universal serial bus, USB, type-C connector when connected to an electronic device (206), spare pins to be used for a data signal instead of a USB differential pair signal on the receptacle side (100) of the USB type-C connector;
creating (403) the data signal from a number of signals received by a controller (210), the data signal to be routed from the receptacle side (100) of the (USB) type-C connector to the plug side of the USB type-C connector; and
routing (404), when the plug side of the USB type-C connector is connected to a peripheral device, the data signal to the spare pins of the receptacle side of the USB type-C connector to allow the data signal to be exchanged between an electronic device (206) and the peripheral device (208) via the spare pins of the receptacle side (100) of the USB type-C connector and bottom pins on the plug side of the USB type-C connector,
wherein the spare pins of the receptacle side (100) of the USB type-C connector are pin A6 and pin A7, or pin B6 and pin B7, depending on the orientation of the receptacle side (100) of the USB type-C connector when connected to the electronic device (206).

11. The method (400) of claim 10, further comprising determining (401) an orientation of the receptacle side (100) of the USB type-C connector when connected to the electronic device (206).

12. The method of claim 10, wherein the controller (210) creates the data signal based on whether a circuit (218) determines if the peripheral device (208) is capable of receiving the data signal.

## Patentansprüche

1. System (200), umfassend:
eine Schaltung (218) zum Identifizieren, basierend auf einer Ausrichtung einer Buchsenseite (100) eines USB-C-Steckverbinders (USB = universeller serieller Bus), wenn er an ein elektronisches Gerät (206) angeschlossen ist, von Ersatzpins, die für ein Datensignal anstelle eines USB-Differentialpaarsignals auf der Buchsenseite (100) des USB-C-Steckverbinders verwendet werden;
eine Steuerung (210) zum Erzeugen des Datensignals aus einer Anzahl von Signalen, die durch die Steuerung (210) empfangen werden, wobei das Datensignal von der Buchsenseite (100) des USB-C-Steckverbinders zu einer Steckerseite (150) des USB-C-Steckverbinders geleitet werden soll; und
einen Multiplexer, MUX (212), um dann, wenn die Steckerseite (150) des USB-C-Steckverbinders an ein Peripheriegerät (208) angeschlossen ist, das Datensignal zu den Ersatzpins der Buchsenseite (100) des USB-C-Steckverbinders zu leiten, damit das Datensignal zwischen dem elektronischen Gerät (206) und dem Peripheriegerät (208) über die Ersatzpins der Buchsenseite (100) des USB-C-Steckverbinders und untere Pins auf der Steckerseite des USB-C-Steckverbinders ausgetauscht werden kann,
wobei die Ersatzpins auf der Buchsenseite (100) des USB-C-Steckverbinders Pin A6 und Pin A7 oder Pin B6 und Pin B7 sind, je nach der Ausrichtung der Buchsenseite (100) des USB-C-Steckverbinders, wenn dieser an das elektronische Gerät (206) angeschlossen ist.

2. System (200) nach Anspruch 1, wobei die Schaltung (218) die Ausrichtung der Buchsenseite (100) des USB-C-Steckverbinders bestimmt, wenn dieser an das elektronische Gerät (206) angeschlossen ist.

3. System (200) nach Anspruch 1, wobei die Anzahl der Signale aus Niedriggeschwindigkeitssignalen und Seitenbandsignalen besteht.

4. System (200) nach Anspruch 3, wobei die Niedriggeschwindigkeitssignale und die Seitenbandsignale ein Inter-IC- (I2C-)Signal, ein Integrierter-Interchip- (I2S-)Tonsignal, ein Unterbrechungssignal, ein Leuchtdioden- (LED-)Steuersignal, ein Seitenbandsteuersignal, ein Systemmanagement-Bust- (SMBus-)Signal, Signal, Personal-System2- (PS/2-)Signal, ein Universeller-Asynchroner-Empfänger-Sender- (UART-) Signal oder Kombinationen davon umfassen.

5. System (200) nach Anspruch 1, bei dem die Steuerung (210) das Datensignal basierend darauf erzeugt, ob die Schaltung (218) bestimmt, ob das Peripheriegerät (218) in der Lage ist, das Datensignal zu empfangen.

6. System, umfassend:
ein elektronisches Gerät (206), das das System nach Anspruch 1 umfasst; und
ein Peripheriegerät (208), um dann, wenn die Steckerseite (150) des USB-C-Steckverbinders an das Peripheriegerät (208) angeschlossen ist, das Datensignal über die unteren Pins auf der Steckerseite des USB-C-Steckverbinders zu empfangen und eine Funktion des Datensignals auszuführen.

7. System nach Anspruch 6, wobei die Steuerung (210) des elektronischen Geräts (206) das Datensignal basierend darauf erzeugt, ob die Schaltung (218) bestimmt, ob das Peripheriegerät (208) in der Lage ist, das Datensignal zu empfangen.

8. System nach Anspruch 6, wobei die unteren Pins auf der Steckerseite (100) des USB-C-Steckverbinders Pin B6 und Pin B7 sind.

9. System nach Anspruch 6, wobei die Anzahl der Signale aus Niedriggeschwindigkeitssignalen und Seitenbandsignalen besteht.

10. Verfahren (300, 400), Folgendes umfassend:
Identifizieren (402), basierend auf einer Ausrichtung einer Buchsenseite (100) eines USB-C-Steckverbinders (USB = universeller serieller Bus), wenn er an ein elektronisches Gerät (206) angeschlossen ist, von Ersatzpins, die für ein Datensignal anstelle eines USB-Differentialpaarsignals auf der Buchsenseite (100) des USB-C-Steckverbinders zu verwenden sind;
Erzeugen (403) des Datensignals aus einer Anzahl von Signalen, die durch eine Steuerung (210) empfangen werden, wobei das Datensignal von der Buchsenseite (100) des (USB-)C-Steckers zur Steckerseite des USB-C-Steckverbinders geleitet werden soll; und
Leiten (404) des Datensignals zu den Ersatzpins der Buchsenseite des USB-C-Steckverbinders, wenn die Steckerseite des USB-C-Steckverbinders an ein Peripheriegerät angeschlossen ist, damit das Datensignal zwischen einem elektronischen Gerät (206) und dem Peripheriegerät (208) über die Ersatzpins der Buchsenseite (100) des USB-C-Steckverbinders und untere Pins auf der Steckerseite des USB-C-Steckverbinders ausgetauscht werden kann,
wobei die Ersatzpins der Buchsenseite (100) des USB-C-Steckverbinders Pin A6 und Pin A7 oder Pin B6 und Pin B7 sind, je nach der Ausrichtung der Buchsenseite (100) des USB-C-Steckverbinders, wenn er an das elektronische Gerät (206) angeschlossen ist.

11. Verfahren (400) nach Anspruch 10, ferner umfassend das Bestimmen (401) einer Ausrichtung der Buchsenseite (100) des USB-C-Steckverbinders, wenn er an das elektronische Gerät (206) angeschlossen ist.

12. Verfahren nach Anspruch 10, wobei die Steuerung (210) das Datensignal basierend darauf erzeugt, ob eine Schaltung (218) bestimmt, ob das Peripheriegerät (208) in der Lage ist, das Datensignal zu empfangen.

## Revendications

1. Système (200) comprenant :
un circuit (218) pour, en fonction de l'orientation du côté prise (100) d'un connecteur bus série universel, USB, de type C lorsqu'il est connecté à un dispositif électronique (206), identifier des broches de rechange utilisées pour un signal de données au lieu d'un signal de paire différentielle USB sur le côté de la prise (100) du connecteur USB de type C ;
un dispositif de commande (210) pour créer le signal de données à partir d'un certain nombre de signaux reçus par le dispositif de commande (210), le signal de données devant être acheminé du côté prise (100) du connecteur USB de type C vers un côté de la fiche (150) du connecteur USB de type C ; et
un multiplexeur, MUX (212), pour, lorsque le côté fiche (150) du connecteur USB de type C est connecté à un dispositif périphérique (208), acheminer le signal de données vers les broches de rechange du côté prise (100) du connecteur USB de type C pour permettre l'échange du signal de données entre le dispositif électronique (206) et le dispositif périphérique (208) par l'intermédiaire des broches de rechange du côté prise (100) du connecteur USB de type C et des broches inférieures sur le côté fiche du connecteur USB de type C,
les broches de rechange du côté prise (100) du connecteur USB de type C étant la broche A6 et la broche A7, ou la broche B6 et la broche B7, selon l'orientation du côté prise (100) du connecteur USB de type C lorsqu'il est connecté au dispositif électronique (206).

2. Système (200) selon la revendication 1, le circuit (218) déterminant l'orientation du côté prise (100) du connecteur USB de type C lorsqu'il est connecté au dispositif électronique (206).

3. Système (200) selon la revendication 1, le nombre de signaux comprenant des signaux à vitesse lente et des signaux de bande latérale.

4. Système (200) selon la revendication 3, les signaux à vitesse lente et les signaux de bande latérale comprenant un signal de circuit inter-intégré, I2C, un signal de son d'interpuce intégré, I2C, un signal d'interruption, un signal de commande d'une diode électroluminescente, DEL, un signal de commande de bande latérale, un signal de bus de gestion de système, SMBus, un signal de système personnel 2, PS/2, un signal d'émetteur-récepteur asynchrone universel, UART, ou leurs combinaisons.

5. Système (200) selon la revendication 1, le dispositif de commande (210) créant le signal de données en fonction de si le circuit (218) détermine que le dispositif périphérique (218) est capable de recevoir le signal de données ou non.

6. Système, comprenant :
un dispositif électronique (206) comportant le système selon la revendication 1 ; et
un dispositif périphérique (208) pour, lorsque le côté fiche (150) du connecteur USB de type C est connecté au dispositif périphérique (208), recevoir le signal de données par l'intermédiaire des broches inférieures du côté fiche du connecteur USB de type C et pour exécuter une fonction du signal de données.

7. Système selon la revendication 6, le dispositif de commande (210) du dispositif électronique (206) créant le signal de données en fonction de si le circuit (218) détermine que le dispositif périphérique (208) est capable de recevoir le signal de données ou non.

8. Système selon la revendication 6, les broches inférieures du côté fiche (100) du connecteur USB de type C étant les broches B6 et B7.

9. Système selon la revendication 6, le nombre de signaux comprenant des signaux à vitesse lente et des signaux de bande latérale.

10. Procédé (300, 400) comprenant :
l'identification (402), en fonction de l'orientation du côté prise (100) d'un connecteur bus série universel, USB, de type C lorsqu'il est connecté à un dispositif électronique (206), des broches de rechange à utiliser pour un signal de données au lieu d'un signal de paire différentielle USB sur le côté prise (100) du connecteur USB de type C ;
la création (403) du signal de données à partir d'un certain nombre de signaux reçus par un dispositif de commande (210), le signal de données devant être acheminé du côté prise (100) du connecteur (USB) de type C vers le côté fiche du connecteur USB de type C ; et
l'acheminement (404), lorsque le côté fiche du connecteur USB de type-C est connecté à un dispositif périphérique, du signal de données aux broches de rechange du côté prise du connecteur USB de type C pour permettre l'échange du signal de données entre un dispositif électronique (206) et le dispositif périphérique (208) par l'intermédiaire des broches de rechange du côté prise (100) du connecteur USB de type C et des broches inférieures du côté fiche du connecteur USB de type C,
les broches de rechange du côté prise (100) du connecteur USB de type C étant la broche A6 et la broche A7, ou la broche B6 et la broche B7, selon l'orientation du côté prise (100) du connecteur USB de type C lorsqu'il est connecté au dispositif électronique (206).

11. Procédé (400) selon la revendication 10, comprenant en outre la détermination (401) d'une orientation du côté prise (100) du connecteur USB de type C lorsqu'il est connecté au dispositif électronique (206).

12. Procédé selon la revendication 10, le dispositif de commande (210) créant le signal de données en fonction de si un circuit (218) détermine que le dispositif périphérique (208) est capable de recevoir le signal de données ou non.
